# EUROPÄISCHE PATENTANMELDUNG

(11) **EP 1 962 416 A2**
(43) Veröffentlichungstag der Anmeldung: **27.08.2008**
(21) Anmeldenummer: 08100975.5
(22) Anmeldetag: 28.01.2008
(51) Int. Cl.: H02P 9/10

(54) **Verfahren und Vorrichtung zur Regelung der Ausgangsspannung eines Kraftfahrzeug-Generators beim Auftreten einer Lastabschaltung**

(30) Priorität: 26.02.2007 DE 102007009158
(71) Anmelder: ROBERT BOSCH GMBH, 70442 Stuttgart (DE)
(72) Erfinder: Herz, Michael, 70469, Stuttgart (DE); Suelzle, Helmut, 71691, Freiberg (DE)

(57) **Zusammenfassung**

Verfahren und Vorrichtung zur Regelung der Ausgangsspannung eines Kraftfahrzeug-Generators beim Auftreten einer Lastabschaltung

Die Erfindung betrifft ein Verfahren und eine Vorrichtung zur Regelung der Ausgangsspannung eines Generators. Der Regler des Generators initiiert nach einem Abschalten eines elektrischen Verbrauchers folgende Schritte:
S1: Abschalten der Generatorerregung,
S2: während des darauffolgenden Absinkens der Bordnetzspannung Durchführung einer Regelung der Phasenspannung des Generators derart, dass die Ausgangsspannung des Generators dem Verlauf der sinkenden Bordnetzspannung folgt, und
S3: wenn die Bordnetzspannung auf ihren Bordnetzspannungs-Sollwert abgesunken ist, Durchführung einer Generatorregelung derart, dass die Ausgangsspannung des Generators auf ihren Sollwert geregelt wird.

## Beschreibung

Die Erfindung betrifft ein Verfahren und eine Vorrichtung zur Regelung der Ausgangsspannung eines Kraftfahrzeug-Generators beim Auftreten einer Lastabschaltung.

### Stand der Technik

Zur Versorgung des Bordnetzes eines Kraftfahrzeugs werden üblicherweise ein Generator und eine Batterie verwendet. Die Ausgangsspannung des Generators wird durch einen Regler eingestellt. Dieser Regler verändert den Erregerstrom im Generator derart, dass möglichst unabhängig von auftretenden Drehzahländerungen und unabhängig von Veränderungen der Belastung durch Verbraucher des Bordnetzes eine vorbestimmte Bordnetzspannung zur Verfügung gestellt wird.

Im Falle einer Abschaltung eines elektrischen Verbrauchers ergibt sich prinzipbedingt im ersten Moment eine zu hohe Ausgangsspannung des Generators. Dies wird vom Regler erkannt, der daraufhin den Erregerstrom reduziert, bis die Ausgangsspannung des Generators wieder ihren Zielwert erreicht hat. Während dieser Zeit sinkt zunächst die Phasenspannung des Generators aufgrund der Entkopplung durch die Dioden des Gleichrichters vom Bordnetz und von dessen Energiespeichern schneller ab als die Bordnetzspannung. Am Ende der Erregerstromanpassung steht ein Einschwingvorgang. Dieser sollte zeitlich möglichst kurz sein und mit möglichst geringer Amplitude ablaufen.

Die Höhe der nach einer Abschaltung eines elektrischen Verbrauchers auftretenden Ausgangsspannung des Generators ist unter anderem abhängig von der Stromstärke vor der Abschaltung durch den abgeschalteten Verbraucher geflossen ist. Im Falle einer großen Stromstärke reicht die erhöhte Ausgangsspannung des Generators aus, um elektrische Energiespeicher des Bordnetzes, insbesondere die Batterie und Kondensatoren, auf ein höheres Spannungsniveau zu laden. Diese Speicher halten die Bordnetzspannung für einen kurzen Zeitraum auf einem Wert, der aus Sicht des Reglers erhöht ist. Dies führt dazu, dass der Regler den Erregerstrom auf einen geringeren Wert reduziert als es für eine Einstellung der gewünschten Generatorausgangsspannung korrekt wäre. Folglich muss der Erregerstrom erst wieder erhöht werden, um die gewünschte Generatorausgangsspannung zur Verfügung zu stellen. Bedingt durch die Zeitkonstante der Induktivität im Läufer führt dies zu einer zeitlichen Verlängerung des Ausregelvorganges.

Um diesen Ausregelvorgang zeitlich zu verkürzen, ist es bereits bekannt, den Erregerstrom im Sinne einer festgelegten Mindesterregung derart einzustellen, dass die Ausgangsspannung des Generators auf einem Wert von beispielsweise 10V gehalten wird. Aber auch bei diesem Vorgehen muss der Erregerstrom ausgehend vom genannten festgelegten Wert auf seinen Zielwert erhöht werden, was wiederum Zeit benötigt.

Aus der DE 102 04 195 A1 sind bereits ein Verfahren und eine Vorrichtung zur Regelung der von einem Generator an ein elektrisches Kfz-Bordnetz abgegebenen Leistung bekannt, bei welchen der Wirkungsgrad des Generators beim Zu- oder Abschalten eines Verbrauchers sprungartig verändert wird. Im Falle einer Abschaltung eines Verbrauchers wird der Wirkungsgrad des Generators sprungartig gesenkt. Als Folge davon stellt der Generator eine geringere Ausgangsleistung zur Verfügung, ohne dass eine sprungartige Drehmomentänderung auftritt. Die Veränderung des Wirkungsgrades des Generators erfolgt durch ein Verdrehen der Phasenlage zwischen Generatorstrom und Generatorspannung. Durch den zusätzliche Einsatz eines Verbrauchermanagements kann der Wirkungsgrad des Generators bereits vor dem Eintritt eines zukünftigen Schaltvorgangs eines Verbrauchers entsprechend angepasst werden.

### Vorteile der Erfindung

Die Vorteile eines Verfahrens mit den im Anspruch 1 angegebenen Merkmalen und einer Vorrichtung mit den im Anspruch 5 angegebenen Merkmalen bestehen darin, dass die Generatorausgangsspannung dann, wenn die Ladung der Energiespeicher so weit abgesunken ist, dass die gewünschte Bordnetzspannung vorliegt, in sehr kurzer Zeit auf einen Spannungswert eingeregelt werden kann, der der gewünschten Bordnetzspannung entspricht. Diese Vorteile werden dadurch erreicht, dass der Regler des Generators nach einem Abschalten eines elektrischen Verbrauchers folgende Schritte initiiert:
S1: Abschalten der Generatorerregung,
S2: während des darauffolgenden Absinkens der Bordnetzspannung Durchführung einer Regelung der Phasenspannungen des Generators derart, dass die Ausgangsspannung des Generators dem Verlauf der sinkenden Bordnetzspannung folgt, und
S3: wenn die Bordnetzspannung auf ihren Bordnetzspannungs-Sollwert abgesunken ist, Durchführung einer Generatorregelung derart, dass die Ausgangsspannung des Generators auf ihren Sollwert geregelt wird.

Weitere vorteilhafte Eigenschaften der Erfindung ergeben sich aus deren nachfolgender Erläuterung anhand der Figuren.

### Zeichnung

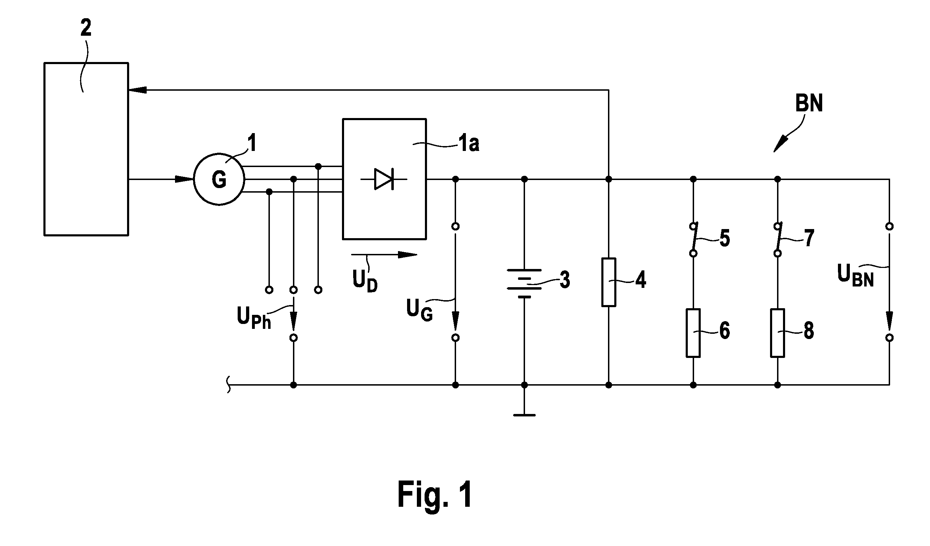

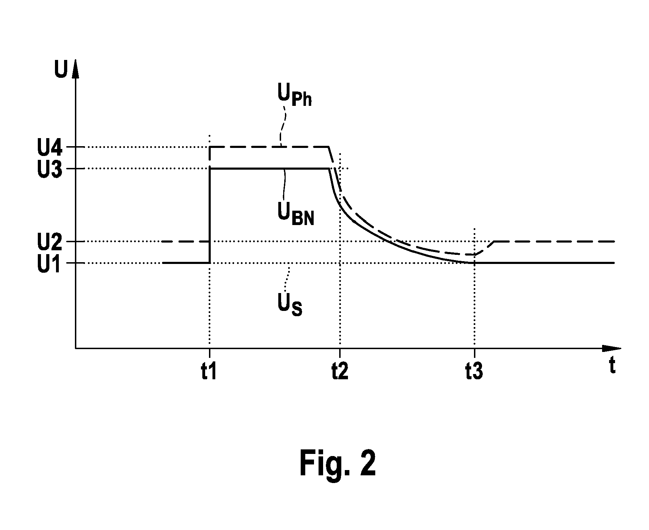

Die Figur 1 zeigt eine Blockdarstellung einer Vorrichtung zur Regelung der Ausgangsspannung eines Kraftfahrzeug-Generators beim Auftreten einer Lastabschaltung. Die Figur 2 zeigt ein Zeitdiagramm zur Veranschaulichung der Funktionsweise der Erfindung.

### Beschreibung

Die Figur 1 zeigt eine Blockdarstellung einer Vorrichtung zur Regelung der Ausgangsspannung eines Kraftfahrzeug-Generators beim Auftreten einer Lastabschaltung.

Diese Vorrichtung weist einen Generator 1 auf, der über einen Gleichrichter 1a mit dem Bordnetz BN eines Kraftfahrzeugs verbunden ist. Zwischen dem Generator 1 und dem Gleichrichter 1a sind die Phasenspannungen des Generators abgreifbar, die in der Figur 1 mit U_{Ph} bezeichnet sind und nachfolgend stets Phasenspannung genannt werden. Über dem Gleichrichter 1a fällt die Diodenspannung U_{D} ab. Am Ausgang des Gleichrichters 1a steht die Generatorspannung U_{G} zur Verfügung, die nachfolgend auch als Ausgangsspannung des Generators bezeichnet wird.

Zur Regelung der Ausgangsspannung des Generators 1 ist ein Regler 2 vorgesehen, der die Bordnetzspannung U_{BN} überwacht und den Erregerstrom im Generator 1 im Normalbetrieb der Vorrichtung in Abhängigkeit von der jeweils vorliegenden Bordnetzspannung derart verändert, dass die Ausgangsspannung des Generators auf einen vorgegebenen Wert geregelt wird und die Bordnetzspannung einen vorgegebenen Sollwert aufweist.

Das Bordnetz BN weist eine Batterie 3, einen Verbraucher 4, einen über einen Schalter 5 schaltbaren Verbraucher 6 und einen über einen Schalter 7 schaltbaren Verbraucher 8 auf.

Sind die Schalter 5 und 7 im geschlossenen Zustand, wie es in der Figur 1 dargestellt ist, dann entnehmen die Verbraucher 6 und 8 aus dem Bordnetz BN Energie. Während dieser Zeit wird die Bordnetzspannung vom Regler 2 überwacht. Der Regler 2 regelt den Generator 1 derart, dass dessen Ausgangsspannung einen vorgegebenen Wert hat und die Bordnetzspannung den vorgegebenen Sollwert aufweist.

Wird nun einer der Verbraucher 6 oder 8 oder werden beide Verbraucher 6 und 8 durch Öffnen eines der Schalter 5 oder 7 oder beider Schalter 5 und 7 abgeschaltet, dann sind die Bordnetzspannung und auch die Ausgangsspannung des Generators schlagartig erhöht.

Dies wird in der Figur 2 veranschaulicht, die ein Zeitdiagramm zur Veranschaulichung der Funktionsweise der Erfindung zeigt. In diesem Zeitdiagramm ist längs der Abszisse die Zeit t und längs der Ordinate die Spannung U aufgetragen. Bei der Kurve U_{Ph} handelt es sich um die Phasenspannung des Generators, bei der Kurve U_{BN} um die Bordnetzspannung. Mit U_{S} ist die Bordnetz-Sollspannung bezeichnet, die einen Spannungswert U1 hat.

Vor dem Zeitpunkt t1 sind die Verbraucher 6 und 8 eingeschaltet. Die Phasenspannung U_{Ph} des Generators hat den Wert U2, welcher um den Wert der Diodenspannung U_{D} größer ist als die Ausgangsspannung U_{G} des Generators. Die Bordnetzspannung BN hat den Wert U1, der dem Bordnetzspannungs-Sollwert entspricht, auf welchen die Ausgangsspannung U_{G} des Generators geregelt wird.

Zum Zeitpunkt t1 werden beispielsweise beide Verbraucher 6 und 8 durch Öffnen der Schalter 5 und 7 abgeschaltet. Als Reaktion darauf sind sowohl die Bordnetzspannung U_{BN} als auch die Phasenspannung U_{Ph} schlagartig erhöht. Die Bordnetzspannung U_{BN} hat den Wert U3. Die Phasenspannung U_{Ph} weist den Wert U4 auf.

Das Vorliegen dieser erhöhten Bordnetzspannung wird vom Regler 2 erkannt, der als Reaktion darauf die Endstufe des Erregerkreises ausschaltet, so dass kurzfristig kein Erregerstrom fließt. Dies entspricht einem Abschalten der Generatorerregung.

Der Spannungswert U3 für die Bordnetzspannung und der Spannungswert U4 für die Phasenspannung des Generators bleiben bis zum Zeitpunkt t2 erhalten und sind durch die Dioden des Gleichrichters 1a begrenzt.

Zum Zeitpunkt t2 beginnt die Bordnetzspannung wieder abzusinken und erreicht zum Zeitpunkt t3 den Bordnetzspannungs-Sollwert U1. Während dieses Absinkens der Bordnetzspannung wird die Erregung durch den Regler 2 derart geregelt, dass die Ausgangsspannung des Generators jeweils auf einem Wert gehalten wird, bei welchem der Generator gerade noch keinen Strom an das Bordnetz abgibt. Dies ist dann der Fall, wenn die Generatorausgangsspannung U_{G} zwischen t2 und t3 stets geringfügig kleiner ist als die Bordnetzspannung und dabei dem Bordnetzspannungsverlauf stets mit einer kleinen und konstanten Differenz folgt.

Um dies zu realisieren wird durch eine Regelung der Phasenspannung U_{Ph} die Mindesterregung des Generators 1 so gewählt, dass der Phasenspannungs-Sollwert der sinkenden Bordnetzspannung U_{BN} folgt. Durch den Spannungsabfall U_{D} über den Dioden des Gleichrichters 1a liegt die Generatorausgangsspannung U_{G} stets minimal unter der Bordnetzspannung U_{BN}, wodurch der Generator 1 keine Leistung an das Bordnetz BN abgibt.

Hat die Bordnetzspannung U_{BN} zum Zeitpunkt t3 von einem höheren Spannungswert kommend den Bordnetzspannungs-Sollwert U1 erreicht, dann muss der Regler 2 den Erregerstrom lediglich geringfügig erhöhen, um zu erreichen, dass der Generator wieder Strom an das Bordnetz abgibt, um die Ausgangsspannung U_{G} des Generators wieder auf ihren Sollwert einzuregeln. Dies kann in sehr kurzer Zeit erfolgen, die wesentlich kleiner ist als die Zeitintervalle, die bei bekannten Vorrichtungen zur Wiedereinregelung der Generatorausgangsspannung auf ihren Sollwert benötigt werden. Innerhalb dieser kurzen Zeit wird auch die Phasenspannung wieder auf den Wert U2 eingeregelt.

## Patentansprüche

1. Verfahren zur Regelung der Ausgangsspannung eines Generators, bei welchem der Regler des Generators nach einem Abschalten eines elektrischen Verbrauchers folgende Schritte initiiert:
S1: Abschalten der Generatorerregung,
S2: während des darauffolgenden Absinkens der Bordnetzspannung Durchführung einer Regelung der Phasenspannung des Generators derart, dass die Ausgangsspannung des Generators dem Verlauf der sinkenden Bordnetzspannung folgt, und
S3: wenn die Bordnetzspannung auf ihren Bordnetzspannungs-Sollwert abgesunken ist, Durchführung der Generatorregelung derart, dass die Ausgangsspannung des Generators auf ihren Sollwert geregelt wird.

2. Verfahren nach Anspruch 1, **dadurch gekennzeichnet, dass** im Schritt S2 die Regelung der Phasenspannung derart durchgeführt wird, dass die Ausgangsspannung des Generators geringfügig kleiner ist als die Bordnetzspannung und der Bordnetzspannung mit kleiner und konstanter Differenz folgt.

3. Verfahren nach Anspruch 1 oder 2, **dadurch gekennzeichnet, dass** im Schritt S2 die Regelung der Phasenspannung derart durchgeführt wird, dass der Generator keinen Strom an das Bordnetz abgibt.

4. Verfahren nach einem der vorhergehenden Ansprüche, **dadurch gekennzeichnet, dass** im Schritt S3 die Generatorregelung derart durchgeführt wird, dass der Generator Strom an das Bordnetz abgibt.

5. Vorrichtung zur Regelung der Ausgangsspannung eines Generators, mit
- einem Generator (1),
- einem mit dem Generator verbundenen Regler (2) und
- einem Bordnetz (BN) mit mindestens einem schaltbaren elektrischen Verbraucher (6,8),
**dadurch gekennzeichnet, dass**
- der Regler (2) zur Initiierung folgender, nach einem Abschalten des schaltbaren elektrischen Verbrauchers vorgesehener Schritte vorgesehen ist:
S1: Abschalten der Generatorerregung,
S2: während des darauffolgenden Absinkens der Bordnetzspannung Durchführung einer Regelung der Phasenspannung des Generators derart, dass die Ausgangsspannung des Generators dem Verlauf der sinkenden Bordnetzspannung folgt, und
S3: wenn die Bordnetzspannung auf ihren Bordnetzspannungs-Sollwert abgesunken ist, Durchführung einer Generatorregelung derart, dass die Ausgangsspannung des Generators auf ihren Sollwert geregelt wird.

6. Vorrichtung nach Anspruch 5, **dadurch gekennzeichnet, dass** der Regler (2) mit dem Bordnetz (BN) verbunden ist.

7. Vorrichtung nach Anspruch 6, **dadurch gekennzeichnet, dass** der Regler (2) zur Detektion der Bordnetzspannung vorgesehen ist und die Schritte S1, S2 und S3 in Abhängigkeit von der detektierten Bordnetzspannung initiiert.

8. Vorrichtung nach einem der Ansprüche 5-7, **dadurch gekennzeichnet, dass** sie eine mit dem Generator (1) verbundene Batterie (3) aufweist.
